# EUROPÄISCHE PATENTSCHRIFT

(11) **EP 1 299 445 B1**
(45) Veröffentlichungstag und Bekanntmachung des Hinweises auf die Patenterteilung: **16.03.2005**
(21) Anmeldenummer: 01962826.2
(22) Anmeldetag: 04.07.2001
(51) Int. Cl.: C08G 18/18, C08G 18/20

(54) **KATALYSATOREN, INSBESONDERE ZUR HERSTELLUNG VON POLYISOCYANAT-POLYADDITIONSPRODUKTEN**
CATALYSTS, ESPECIALLY FOR PRODUCING POLYISOCYANATE POLYADDITION PRODUCTS
CATALYSEURS, NOTAMMENT POUR PRODUIRE DES PRODUITS DE POLYADDITION DE POLYISOCYANATE

(30) Priorität: 07.07.2000 DE 10033120
(43) Veröffentlichungstag der Anmeldung: 09.04.2003
(73) Patentinhaber: BASF AKTIENGESELLSCHAFT, 67056 Ludwigshafen (DE)
(72) Erfinder: KREYENSCHMIDT, Martin, 49393 Lohne (DE); MALZ, Hauke, 49356 Diepholz (DE); RODEWALD, Dieter, 49152 Bad-Essen (DE); FLUG, Thomas, 49419 Wagenfeld (DE); FRERICKS, Ansgar, 49078 Osnabrück (DE)
(86) Internationale Anmeldenummer: PCT/EP2001/007638
(87) Internationale Veröffentlichungsnummer: WO 2002/004537

(56) Entgegenhaltungen:
- WO-A-01/00723
- DE-A- 2 523 633
- US-A- 3 719 680
- US-A- 3 721 674
- US-A- 4 189 543
- US-A- 5 225 513

## Beschreibung

Die Erfindung bezieht sich auf Katalysatoren enthaltend als strukturelle Einheiten mindestens eine tertiäre Aminogruppe sowie mindestens eine Gruppe, die nach ihrer Zersetzung, bevorzugt ihrer Hydrolyse, das tertiäre Amin komplexieren oder protonieren kann sowie die Verwendung derartiger Katalysatoren. Des weiteren betrifft die Erfindung Verfahren zur Herstellung von Polyisocyanat-Polyadditionsprodukten, beispielsweise Weichintegral-, Halbhart-, Hart- und Weichschaumstoffen sowie mikrozellulären Schäumen, bevorzugt Polyurethanweichschaumstoffen, insbesondere für Matratzen, Polsterungen oder Teppiche für Automobil- oder Möbelanwendungen, Schuhsohlen, Lenkräder und derart erhältliche Produkte.

Die Herstellung von Polyisocyanat-Polyadditionsprodukten durch Umsetzung von Polyisocyanaten mit gegenüber Isocyanaten reaktiven Verbindungen in Anwesenheit von Katalysatoren, die die Reaktion der gegenüber Isocyanaten reaktiven Stoffe mit Isocyanaten beschleunigen und gegebenenfalls Treibmitteln, Zusatzstoffen, und/oder Hilfsmitteln ist allgemein bekannt.

Wie auch andere Kunststoffe sind Polyisocyanat-Polyadditionsprodukte Alterungsprozessen unterworfen, die im allgemeinen mit zunehmender Zeit zu einer Verschlechterung der Gebrauchseigenschaften führen. Wesentliche Alterungseinflüsse sind beispielsweise Hydrolyse, Photooxidation und Thermooxidation, die zu Bindungsbrüchen in den Polymerketten führen. Bei Polyisocyanat-Polyadditionsprodukten, beispielsweise Polyurethanen, im Folgenden auch als PUR bezeichnet, hat speziell die Einwirkung von Feuchtigkeit und noch verstärkt die Kombination von Feuchtigkeit und erhöhter Temperatur eine hydrolytische Spaltung der Urethan- und Harnstoffbindungen zur Folge.

Diese Spaltung äußert sich nicht nur in einer signifikanten Verschlechterung der Gebrauchseigenschaften, sondern führt auch zur Bildung von primären aromatischen Aminen wie z.B. Toluylendiamin (TDA) und Diaminodiphenylmethan (MDA) oder primären aliphatischen Aminen wie beispielsweise Hexamethylendiamin oder Isophorondiamin.

Wie in Versuchen festgestellt wurde, wird die Aminbildung von einer Reihe von Parametern beeinflußt. Insbesondere hohe Temperaturen ab 80°C in Kombination mit hoher Luftfeuchtigkeit führen zur hydrolytischen Spaltung der Urethan- und Harnstoffbindungen. Derartige Bedingungen sind für den Werkstoff Polyurethan in diversen Anwendungsgebieten von Bedeutung.

Ein weiterer Parameter, der die Bildung primärer Amine signifikant beeinflußt, ist die Art und Menge der verwendeten Katalysatoren. Wie in diversen Experimenten nachgewiesen werden konnte, katalysieren die in Polyurethansystemen enthaltenen, für die Urethanisierungs- und Treibreaktion notwendigen Katalysatoren, in erheblichem Maße auch die hydrolytische Rückspaltungsreaktion. Die Anwesenheit von Katalysatoren ist somit eine ganz entscheidende Voraussetzung für die Hydrolyse der Urethan- und Harnstoffbindungen. Darüber hinaus konnte gezeigt werden, daß die Effizienz der Hydrolyse in hohem Maße von der Aktivität und der Art des Katalysators abhängt, sowie der Tatsache, ob der Katalysator im System verbleibt oder aus dem Material herausmigrieren kann. Insbesondere tertiäre Aminkatalysatoren mit reaktionsfähigen funktionellen Gruppen wie OH- und NH₂ beschleunigen die Aminbildung durch Absenkung der Aktivierungsenergie für die Spaltreaktion erheblich. Die funktionellen Gruppen bewirken den Einbau der Katalysatoren in das entstehende PUR-Netzwerk, und die damit hergestellten Produkte weisen den Vorteil geringerer Geruchs- und Foggingproblematik auf, da die Katalysatoren nach der Fertigstellung des PUR-Produktes nicht durch Diffusion entweichen können. Dasselbe gilt für Rezepturen mit Polyolen, die mit primären oder sekundären Aminen als Startmoleküle hergestellt wurden und somit katalytisch aktive Zentren besitzen. Derartige Polyole kommen in jüngster Zeit vermehrt zum Einsatz. Bei Polyurethanteilen mit solchen Bestandteilen, die als Spezialanwendungen besonderen feucht-warmen Bedingungen ausgesetzt sind, kann die Bildung von primären aromatischen Aminen als Spaltprodukte nicht ausgeschlossen werden. Bei Schaumstoffen mit Aminkatalysatoren, die keine einbaufähigen funktionellen Gruppen enthalten, entweichen diese Katalysatoren dagegen in der Regel bereits kurze Zeit nach der Fertigstellung, bzw. bei der Alterung des Schaumstoffes. Bei solchen Schaumstoffen führen feucht-warme Bedingungen zu wesentlich geringeren Gehalten an aromatischen Aminen.

Die eingangs dargestellte Problematik tritt folglich verstärkt beim Einsatz von einbaufähigen Katalysatoren auf. Diese Katalysatoren weisen mindestens eine gegenüber Isocyanaten reaktive Gruppe auf und werden aufgrund der Reaktion mit den Isocyanaten kovalent im PUR gebunden. Dadurch wird das Foggingverhalten verbessert, da der Katalysator nicht aus dem PUR ausdünstet, allerdings führt das Verbleiben in PUR zu einer verstärkten Rückspaltung der Urethangruppen.

Aufgabe der Erfindung war es, Polyisocyanat-Polyadditionsprodukte, zu entwickeln, die nach ihrer Herstellung eine geringere Tendenz zur Spaltung ihrer Urethan- und Harnstoffbindungen aufweisen.

Diese Aufgabe konnte durch die in der Patentansprüchen beschriebenen Katalysatoren gelöst werden.

Gegenstand der Erfindung sind somit Katalysatoren, insbesondere solche, die die Umsetzung von Isocyanaten mit gegenüber Isocyanaten reaktiven Verbindungen, insbesondere Hydroxylgruppen, katalysieren, enthaltend als strukturelle Einheiten mindestens eine, bevorzugt 1 bis 20, besonders bevorzugt 1 bis 5 tertiäre Aminogruppen sowie mindestens eine Gruppe, bevorzugt 1 bis 60, besonders bevorzugt 1 bis 10 Gruppen, die nach ihrer Zersetzung, bevorzugt ihrer Hydrolyse, tertiäre Aminogruppen komplexieren oder protonieren können.

Diese erfindungsgemäßen Katalysatoren zeichnen sich dadurch aus, daß sie aufgrund des tertiären Amins in ihrer Ausgangsstruktur die Umsetzung von Isocyanaten mit gegenüber Isocyanaten reaktiven Verbindungen, üblicherweise Verbindungen einschließlich Wasser, die mindestens eine Hydroxyl-, Thiol- und/oder primäre und/oder sekundäre Aminogruppe aufweisen, zu Urethanen und/oder Harnstoffen katalysieren. Diese katalytische Wirkung der Ausgangsstruktur wird überraschend durch mindestens eine zusätzliche hydrolisierbare Gruppe nicht beeinträchtigt.

Nachdem beim Herstellprozeß der Polyisocyanat-Polyadditionsprodukte die Katalysatoren ihre katalytische Aktivität entfalten konnten, werden die erfindungsgemäßen Katalysatoren bei der anschließenden Lagerung der Polyisocyanat-Polyadditionsprodukte oder deren Gebrauch insbesondere unter feuchten und/oder warmen Bedingungen, die auch die Spaltung der Urethanstrukturen fördern, zunehmend zersetzt, insbesondere hydrolysiert. Die Zersetzung der Katalysatoren führt zur Bildung von mindestens einer Gruppe, die die tertiäre Aminogruppe des Katalysators komplexieren oder protonieren kann. Durch diese Komplexierung und/oder Protonierung der tertiären Aminogruppe wird das katalytisch aktive Zentrum blockiert und somit der Katalysator deaktiviert. Da dieses katalytisch aktive Zentrum wie eingangs dargestellt auch die Rückspaltung der Urethanstrukturen katalysiert, wird mit den erfindungsgemäßen Katalysatoren die gestellte Aufgabe, d.h. eine Rückspaltung zu vermeiden, gelöst. Die erfindungsgemäßen Katalysatoren weisen zudem den Vorteil auf, daß während oder nach der Herstellung der Polyisocyanat-Polyadditionsprodukte eine Zugabe von Verbindungen, die die Katalysatoren deaktivieren, überflüssig wird, da sich der Katalysator selbst deaktivert, beispielsweise bei Hydrolysealterung.

Die Katalysatoren werden somit bevorzugt in Polyisocyanat-Polyadditionsprodukten sowohl zur Katalyse bei der Herstellung als auch zur Stabilisierung der Polyisocyanat-Polyadditionsprodukte, insbesondere Polyurethane, gegen eine Spaltung der Urethan- und Harnstoffbindungen verwendet, beispielsweise durch Blockierung von aminischen Katalysatoren durch Protonierung der katalytisch aktiven Zentren. Zudem können einige Formen dieser Katalysatoren in Polyisocyanat-Polyadditionsprodukten zur Reaktion mit Aminogruppen, beispielsweise zu Amiden, in den Polyisocyanat-Polyadditionsprodukten Verwendung finden. Darüber hinaus können die Katalysatoren während der Alterung in eine ionische Form (Salz) überführt werden, die nicht zum Foggingverhalten des Systems beiträgt. Die Diffusion von Aminen aus Polyisocyanat-Polyadditionsprodukten und die Rückspaltung der Urethanbindung, beispielsweise durch in den Polyisocyanat-Polyadditionsprodukten vorhandene aminische Katalysatoren, kann erfindungsgemäß vermindert werden.

Überraschend konnte festgestellt werden, daß die hydrolysierbaren Gruppen in Mischung mit Isocyanaten oder in gegenüber Isocyanaten reaktiven Verbindungen, beispielsweise Polyetherpolyalkoholen oder Polyesterpolyalkoholen bei Raumtemperatur, d.h. 25°C stabil sind. Es wurde zudem festgestellt, daß die erfindungsgemäßen Katalysatoren, die bei der Herstellung von Polyisocyanat-Polyadditionsprodukten eingesetzt werden, den Herstellprozeß nahezu unbeschadet überstehen und nur in untergeordnetem Maße bereits während des Verarbeitungsprozesses deaktiviert werden.

Als Gruppe, die nach ihrer Zersetzung die tertiäre Aminogruppe, oder allgemein das tertiäre Amin, komplexieren oder protonieren kann, können allgemein Gruppen vorliegen, die hydrolysiert werden können und nach der Hydrolyse mindestens eine Gruppe aufweisen, die tertiäre Aminogruppen komplexieren oder protonieren kann. Als derartige hydrolysierbare Gruppen kommen beispielsweise Ester und/oder Säureanhydride, bevorzugt Carbonsäureester, Sulfonsäureester, Carbonsäureanhydride, Lactone, Sultone, Phosphorsäureester und/oder Phosphonsäureester in Betracht. Die nach der Zersetzung der Katalysatoren frei vorliegenden Säuregruppen können das tertiäre Amin des Katalysators protonieren oder komplexieren und somit inhibieren. In Betracht kommen auch polymeranaloge Katalysatoren, beispielsweise hergestellt aus Polyimin (Michael- analog umgesetzt mit oben genannten Substanzen wie Carbonsäureestern) bzw. Katalysatoren, deren freie Aminogruppen mit entsprechenden polymeranalogen Vinylcarbonsäureestern und/oder Vinylcarbonsäureanhydriden umgesetzt werden.

Die Katalysatoren können weiterhin zusätzlich zu den bereits beschriebenen Gruppen noch mindestens eine gegenüber Isocyanaten reaktive Gruppe, beispielsweise Hydroxyl-, Thiol- und/oder primäre und/oder sekundäre Aminogruppe, bevorzugt Hydroxyl- und/oder primäre und/oder sekundäre Aminogruppe, besonders bevorzugt Hydroxylgruppe aufweisen.

Die Synthese katalytisch wirksamer tertiärer Amine ist allgemein bekannt und Herstellungsmethoden sind z.B. beschrieben in Houben Weyl, Band 11/1 und 11/2. Beispielsweise können primäre und sekundäre Amine durch Anlagerung an Doppelbindungen in tertiäre Amine überführt werden. So können aus Natriumallylat und sekundären Aminen einbaubare Katalysatoren hergestellt werden, z.B. reagieren Piperidin und Natriumallylat zum N-(3-Hydroxypropyl)-piperidin, welches mit einer Carbonsäure oder einem Carbonsäureanhydrid oder einem Carbonsäurechlorid weiter verestert werden kann.

Die Herstellung der erfindungsgemäßen Katalysatoren kann beispielsweise auch gemäß der allgemein bekannten Michaeladdition durch Umsetzung von primären und/oder sekundären Aminen mit α,β-ungesättigten Carbonylverbindungen, beispielsweise Anhydride oder Ester bzw. Polyester der Methacrylsäure, Itaconsäure, Acrylsäure und/oder Maleinsäure erfolgen. Als Ausgangssubstanzen kommen beispielsweise in Betracht: Acrylsäuremethylester, Acrylsäureethylester, Acrylsäurepropylester, Acrylsäuretertiärbutylester, Acrylsäurephenylester, Methacrylsäuremethylester, Itaconsäuredimethylester, Aconitsäuretrimethylester, Aconitsäuretriethylester, Aconitsäuretributylester, Methacrylsäureethylester, Methacrylsäurepropylester, Methacrylsäuretertiärbutylester, Methacrylsäurephenylester, Maleinsäureanhydrid, Maleinsäuredimethylester, Maleinsäurediallylester, Maleinsäuredibutylester, Maleinsäurediethylester, Fumarsäurediethylester, Fumarsäuredimethylester und/oder Fumarsäuredibutylester als Carbonylverbindungen sowie primäre und sekundäre aliphatische oder cycloaliphatische Amine enthaltend 1 bis 100 C-Atomen und 1 bis 50 N-Atomen, z.B. Morpholin, N-Bis-(3-dimethylaminopropyl)amin, Piperidin, N-Methylpiperazin, N-Ethylpiperazin, N-Propylpiperazin, Pyrrolidin, N-Aminoethylpiperazin, Aminopropylimidazol, N-(2-Aminoethyl)morpholin, 1,6-Di-(2-Aminoethyl)piperazin, Hexahydrotriazin, bevorzugt solche Amine die neben der Aminofunktion noch 1-5 OH-Funktionen haben, z.B. 1-(2-Hydroxyethyl)piperazin, 1,3,5-Tri-(2-Hydroxyethyl)-hexahydrotriazin als primäre und sekundäre Amine.

Die Umsetzung kann nach allgemein bekannten Vorschriften, die zur Michaeladdition bekannt sind, erfolgen.

Erfindungsgemäße Katalysatoren können auch durch Umsetzung von Aminen mit anderen Verbindungen mit aktivierten Doppelbindungen hergestellt werden. So können Amine an ungesättigte Nitrile gekoppelt werden. Nach Verseifung der Nitrilgruppe kann diese dann in eine Estergruppe umgewandelt werden. Ebenfalls erhält man Katalysatoren durch Addition eines sek. Amins an Vinylphosphonsäurester, z.B. Reaktion von N-Methylpiperazin und Vinylphosphonsäurediethylester.

Die erfindungsgemäßen Katalysatoren enthalten mindestens genauso viele oder mehr zersetzbare und nach Zersetzung komplexierend oder protonierend wirkende Gruppen wie katalytisch aktive Zentren.

Eine weitere Syntheseroute zu erfindungsgemäßen Katalysatoren besteht darin, primäre und sekundäre Amine mit Alkylenoxiden, z.B. Ethylenoxid oder Propylenoxid umzusetzen. Die so entstehenden Hydroxyalkyamine können nach bekannter Methode mit Carbonsäureestern, Carbonsäurechloriden oder Carbonsäureanhydriden verestert werden.

Die erfindungsgemäßen Katalysatoren werden bevorzugt in den allgemein bekannten Verfahren zur Herstellung von Polyisocyanat-Polyadditionsprodukten, bevorzugt Polyurethanen, die gegebenenfalls Isocyanurat und/oder Harnstoffstrukturen aufweisen können, besonders bevorzugt Polyurethanweichschaumstoffen, eingesetzt.

Die erfindungsgemäßen Katalysatoren werden in den Verfahren zur Herstellung der Polyisocyanat-Polyadditionsprodukten bevorzugt in einer Menge von 0,01 bis 15 Gew.-%, besonders bevorzugt 0,05 bis 10 Gew.-%, insbesondere 0,05 bis 5 Gew.-%, bezogen auf das Gewicht des Polyisocyanat-Polyadditionsproduktes, eingesetzt. Die erfindungsgemäßen Katalysatoren weisen ein Molekulargewicht von 100 bis 5000 g/mol, bevorzugt 100 bis 3000 g/mol und besonders bevorzugt 100 bis 2000 g/mol auf.

Die Herstellung von Polyisocyanat-Polyadditionsprodukten üblicherweise durch Umsetzung von Polyisocyanaten mit gegenüber Isocyanaten reaktiven Verbindungen in Anwesenheit von Katalysatoren, die die Reaktion der gegenüber Isocyanaten reaktiven Stoffe mit Isocyanaten beschleunigen und gegebenenfalls Treibmitteln, Zusatzstoffen und/oder Hilfsmitteln ist allgemein bekannt. Als Polyisocyanat-Polyadditionsprodukte können beispielsweise kompakte oder zellige, beispielsweise mikrozellige, weiche, halbharte oder harte Polyurethanschaumstoffe, thermoplastische Polyurethane, oder Polyurethanelastomere nach üblichen Verfahren unter Verwendung der erfindungsgemäßen Katalysatoren hergestellt werden. Bevorzugt setzt man die dargestellten Katalysatoren in Verfahren zur Herstellung von Polyurethanelastomeren oder geschäumten Polyisocyanat-Polyadditionsprodukten, bevorzugt Polyurethanweichschaumstoffen, insbesondere mit einer Dichte von 15 bis 300 kg/m³, bevorzugt 15 bis 120 kg/m³, bevorzugt Matratzen und/oder Polsterungen für Möbel bzw. Teppiche, besonders bevorzugt Krankenhausmatratzen oder PUR-Weichschaumstoffteilen, die feucht-warmen Bedingungen ausgesetzt sind, durch Umsetzung von Isocyanaten mit gegenüber Isocyanaten reaktiven Verbindungen in Gegenwart von Katalysatoren, Treibmitteln und gegebenenfalls Zusatzstoffen und/oder Hilfsmitteln ein. Diese Produkte, d.h. insbesondere die Polsterungen für Möbel und/oder Teppiche bzw. die Matratzen werden zunehmend zur Reinigung bzw. Desinfektion mit heißem Dampf behandelt, womit gerade bei diesen Produkten die erfindungsgemäßen Vorteile besonders ausgeprägt sind.

Die allgemein üblichen Ausgangsstoffe für die Herstellung der Polyisocyanat-Polyadditionsprodukte werden nachfolgend beispielhaft beschrieben.

Als Isocyanate können die an sich bekannten aliphatischen, cycloaliphatischen, araliphatischen und vorzugsweise aromatischen organischen Isocyanate, bevorzugt mehrfunktionelle, besonders bevorzugt Diisocyanate, eingesetzt werden.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylen-diisocyanat-1,4, 2-Methylpentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, aromatische Di- und Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 3,5 Gew.-%, vorzugsweise von 31 bis 12 Gew.-%, bezogen auf das Gesamtgewicht, modifiziertes 4,4'-Diphenylmethan-diisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4,4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat, NDI, HDI, TODI und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, NDI, TODI, Roh-MDI, 2,4- und/oder 2,6-Toluylen-diisocyanat gegebenenfalls gemischt werden.

Bevorzugt werden als Isocyanate in den erfindungsgemäßen Mischungen bzw. Verfahren 4,4'-, 2,4'- und/oder 2,2'-Diphenylmethandiisocyanat, 2,4- und/oder 2,6-Toluylendiisocyanat, NDI, Hexamethylendiisocyanat und/oder Isophorondiisocyanat eingesetzt, wobei diese Isocyanate sowohl in beliebigen Mischungen als auch wie bereits beschrieben modifiziert eingesetzt werden können.

Als gegenüber Isocyanaten reaktive Verbindungen mit üblicherweise mindestens zwei reaktiven Wasserstoffatomen, üblicherweise Hydroxyl- und/oder Aminogruppen, können zweckmäßigerweise solche mit einer Funktionalität von 2 bis 8, vorzugsweise 2 bis 6, und einem Molekulargewicht von üblicherweise 60 bis 10000, verwendet werden. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole; die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 500 bis 8000.

Als Polyether-polyole eignen sich beispielsweise auch polymermodifizierte Polyether-polyole, vorzugsweise Pfropf-polyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril hergestellt werden können.

Die Polyether-polyole können ebenso wie die Polyester-polyole einzeln oder in Form von Mischungen verwendet werden. Ferner können sie mit den Pfropf-polyether-polyolen oder Polyesterpolyolen sowie hydroxylgruppenhaltigen Polyesteramiden, Polyacetalen und/oder Polycarbonaten gemischt werden.

Als Polyolkomponenten werden dabei für Polyurethanhartschaumstoffe, die gegebenenfalls Isocyanuratstrukturen aufweisen können, hochfunktionelle Polyole, insbesondere Polyetherpolyole auf Basis hochfunktioneller Alkohole, Zuckeralkohole und/oder Saccharide als Startermoleküle, für flexible Schäume 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt. Die Herstellung der Polyetherpolyole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Zur Herstellung von thermoplastischen Polyurethanen verwendet man bevorzugt Polyole mit einer Funktionalität von 2 bis 2,2 und keine Vernetzungsmittel.

Als gegenüber Isocyanaten reaktive Verbindungen können des weiteren Kettenverlängerungs- und/oder Vernetzungsmittel verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Wasser, Diole und/oder Triole mit Molekulargewichten von 60 bis <500, vorzugsweise von 60 bis 300 verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz, wobei thermoplastische Polyurethane bevorzugt.ohne Vernetzungsmittel hergestellt werden.

Als Katalysatoren können zusätzlich zu den erfindungsgemäßen Katalysatoren allgemein übliche Verbindungen eingesetzt werden, beispielsweise organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)imidazol, N-Formyl-N,N'-dimethylbutylendiamin, N-Dimethylaminoethylmorpholin, 3,3'-Bis-dimethylamino-di-n-propylamin und/oder 2,2'-Dipiperazin-diisopropylether, Dimethylpiperazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Bevorzugt können tertiäre aliphatische und/oder cycloaliphatische Amine in den Mischungen enthalten sein, besonders bevorzugt Triethylendiamin, Bis(dimethylaminoethyl)ether oder 2-(2-Dimethylaminoethoxy)ethanol.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser in üblichen Mengen eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Üblicherweise werden die organischen Polyisocyanate und die gegenüber Isocyanaten reaktiven Verbindungen mit einem Molekulargewicht von 60 bis 10000 g/mol in solchen Mengen zur Umsetzung gebracht, daß das Äquivalenzverhältnis von NCO-Gruppen der Polyisocyanate zur Summe der reaktiven Wasserstoffatome der gegenüber Isocyanaten reaktiven Verbindungen 0,5 bis 5 : 1, bevorzugt 0,5 bis 3 : 1, vorzugsweise 0,5 bis 2 : 1 und insbesondere 0,5 bis 1,5 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren, oder dem bekannten Prepolymer-Verfahren hergestellt werden, beispielsweise mit Hilfe der Hochdruck- oder Niederdruck-Technik in offenen oder geschlossenen Formwerkzeugen, Reaktionsextrudern oder Bandanlagen.

Bevorzugt werden mit den erfindungsgemäßen Mischungen geschäumte Polyisocyanat-Polyadditionsprodukte, beispielsweise geschäumte Polyurethane und/oder Polyisocyanurate hergestellt.

Als vorteilhaft hat es sich erwiesen, die Polyisocyanat-Polyadditionsprodukte nach dem Zweikomponentenverfahren herzustellen und die gegenüber Isocyanaten reaktiven Verbindungen und gegebenenfalls die Katalysatoren, Treibmittel und/oder Hilfs- und/oder Zusatzstoffe in der A-Komponente zu vereinigen und als B-Komponente die Isocyanate und Katalysatoren und/oder Treibmittel einzusetzen.

Die Erfindung soll anhand der folgenden Beispiele dargestellt werden.

### Beispiele

### Beispiel 1

### Synthese eines einbaubaren Katalysators aus 1-(2-Hydroxyethyl)piperazin und Acrylsäure-tert.-butylester

In einem 500-ml-Vierhalskolben mit Rückflußkühler, Tropftrichter (mit Druckausgleich) und Innenthermometer wurden 65,1 g 1-(2-Hydroxyethyl)piperazin in 75 ml Methanol gelöst. Unter Rühren tropfte man innerhalb von 60min 64,09g Acrylsäure-tert.-butylester zu der Lösung. Man erhitzte auf 60°C und rührte 2 h bei dieser Temperatur. Dann wurde die Mischung auf Raumtemperatur abgekühlt. Man ließ das Produkt 24 h stehen. Dann wurde das Methanol und der überschüssige Acrylsäure-tert.-butylester im Vakuum über einen Rotationsverdampfer abdestilliert.

### Beispiel 2

### Synthese eines Katalysators aus 1-(2-Hydroxyethyl)piperazin und Methylacrylat

In einem 500-ml-Vierhalskolben mit Rückflußkühler, Tropftrichter (mit Druckausgleich) und Innenthermometer wurden 80 g 1-(2-Hydroxyethyl)piperazin in 75 ml Methanol gelöst. Unter Rühren tropfte man 52,9 g Methylacrylat zu der Lösung. Es wurde auf 60°C erhitzt und bei dieser Temperatur 2 h gerührt. Man ließ das Produkt 24 h stehen. Dann wurde das Methanol und das überschüssige Methylacrylat im Vakuum über einen Rotationsverdampfer abdestilliert.

### Beispiel 3

### Synthese eines Katalysators aus 1-(2-Hydroxyethyl)piperazin und Maleinsäuredimethylester

In einem 500-ml-Vierhalskolben mit Rückflußkühler, Tropftrichter (mit Druckausgleich), und Innenthermometer wurden 65 g 1-(2-Hydroxyethyl)piperazin in 75 ml Methanol gelöst. Unter Rühren tropfte man 71,96 g Maleinsäuredimethylester zu der Lösung. Nach der Zugabe von ca. 50 % des Maleinsäuredimethylesters fiel ein weißlicher Niederschlag aus.

### Beispiel 4

### Synthese eines Katalysators aus Methylacrylat und Piperidin

In einem 500-ml-Vierhalskolben mit Rückflußkühler, Tropftrichter (mit Druckausgleich), und Innenthermometer wurden 93,65 g Piperidin in 75 ml Methanol gelöst. Unter Rühren tropfte man 75,76 g Methylacrylat zu der Lösung. Man ließ das Produkt 24 h stehen. Dann wurde das Methanol und das überschüssige Methylacrylat im Vakuum über einen Rotationsverdampfer abdestilliert.

### Beispiel 5

### Synthese eines Katalysators aus Maleinsäuredimethylester und N,N-Bis-(3-dimethylaminopropyl)amin

In einem 500-ml-Vierhalskolben mit Rückflußkühler, Tropftrichter (mit Druckausgleich), und Innenthermometer wurden 84,77 g N,N-Bis-(3-dimethylaminopropyl)amin in 75 ml Methanol gelöst. Unter Rühren tropfte man 65,23 g Maleinsäuredimethylester zu der Lösung. Anschließend wurde das Produkt 2 h auf 60°C aufgeheizt. Danach wurde 24 h bei Raumtemperatur gerührt. Dann wurde das Methanol im Vakuum über einen Rotationsverdampfer abdestilliert.

### Beispiel 6

### Synthese eines Katalysators aus Morpholin und Methylacrylat

In einem 500-ml-Vierhalskolben mit Rückflußkühler, Tropftrichter (mit Druckausgleich), und Innenthermometer wurden 95,83 g Morpholin in 150 ml Methanol gelöst. Unter Rühren tropfte man 86,09 g Methylacrylat zu der Lösung. Es wurde bei Raumtemperatur gerührt. Dann wurde das Methanol und das überschüssige Morpholin im Vakuum über eine Vigreuxkolonne abdestilliert.

### Beispiel 7

### Synthese eines Katalysators aus Aminopropylimidazol und Methylacrylat

In einem 500-ml-Vierhalskolben mit Rückflußkühler, Tropftrichter (mit Druckausgleich), und Innenthermometer wurden 62,58 g Aminopropylimidazol in 75 ml Methanol gelöst. Unter Rühren tropfte man 107,6 g Methylacrylat zu der Lösung. Man ließ 48 h stehen. Dann wurde das Methanol und das überschüssige Methylacrylat im Vakuum über eine Vigreuxkolonne abdestilliert.

### Beispiel 8

### Synthese eines Katalysators aus Methylacrylat und N-(2-Aminoethyl)morpholin

In einem 500 ml Vierhalskolben mit Rückflußkühler, Tropftrichter (mit Druckausgleich), und Innenthermometer wurden 65,1 g N-(2-Aminoethyl)morpholin in 75 ml Methanol gelöst. Unter Rühren tropft man 107,6 g Methylacrylat zu der Lösung.

Man ließ 48 h stehen. Dann wurde das Methanol und das überschüssige Methylacrylat im Vakuum über eine Vigreuxkolonne abdestilliert.

### Beispiel 9

### Synthese eines Katalysators aus Methylacrylat und N,N-Bis-(3-dimethylaminopropyl) amin

In einem 500 ml Vierhalskolben mit Rückflußkühler, Tropftrichter (mit Druckausgleich), und Innenthermometer wurden 93,65 g N,N-Bis-(3-dimethylaminopropyl)amin in 75 ml Methanol gelöst. Unter Rühren tropfte man 47,33 g Methylacrylat zu der Lösung.

Es wurde 24 h bei Raumtemperatur gerührt. Dann wurde das Methanol und das überschüssige Methylacrylat im Vakuum über einen Rotationsverdampfer abdestilliert.

### Beispiel 10

### Herstellung eines Vergleichsweichschaumstoffes

Es wurden 750 g Polyolkomponente mit 361 g Isocyanatkomponente (Index 90) vermischt und die aufschäumende Masse in eine auf 50°C temperierte Aluminiumform (40 cm x 40 cm x 10 cm) überführt, wobei sich die Komponenten folgendermaßen aufbauten:

### Polyolkomponente:

97 Gew.-Teile Lupranol® 2090, Molekulargewicht: 6000, OH-Zahl: 28 (Elastogran GmbH)
3 Gew.-Teile Lupranol® 2047, Molekulargewicht 4000, OH-Zahl: 42 (Elastogran GmbH)
3,31 Gew.-Teile Wasser
0,6 Gew.-Teile 2-(2-Dimethylaminoethoxy)ethanol
0,5 Gew.-Teile Tegostab® B8631 (Goldschmidt)
0,8 Gew.-Teile Aminopropylimidazol (BASF Aktiengesellschaft)

### Isocyanatkomponente:

Mischung aus 42 Teilen Lupranat® M 20 W (Polymer-MDI, Elastogran GmbH) und einem Gemisch aus 2,4'- und 4,4'-MDI (11 Teile Lupranat® ME und 47 Teile Lupranat® MI, Elastogran GmbH)

Nach 5 min wurde der fertige Weichschaumstoff aus der Form genommen. Die Charakterisierung dieses Schaumstoffs und die Reaktionsparameter (aufgenommen an einem Becherschaum mit gleicher Rezeptur und gleichem Index) sind in Tabelle 1 aufgeführt.

### Beispiel 11

### Herstellung eines Weichschaumstoffes mit dem Katalysator aus Beispiel 3

Es wurden 750 g Polyolkomponente mit 360 g Isocyanatkomponente (Index 90) vermischt und die aufschäumende Masse in eine auf 50°C temperierte Aluminiumform (40 cm x 40 cm x 10 cm) überführt, wobei sich die Komponenten folgendermaßen aufbauten:

### Polyolkomponente

97 Gew.-Teile Lupranol® 2090, Molekulargewicht: 6000, OH-Zahl: 28 (Elastogran GmbH)
3 Gew.-Teile Lupranol® 2047, Molekulargewicht 4000, OH-Zahl: 42 (Elastogran GmbH)
3,31 Gew.-Teile Wasser
0,6 Gew.-Teile 2-(2-Dimethylaminoethoxy)ethanol
0,5 Gew.-Teile Tegostab® B8631 (Goldschmidt)
0,8 Gew.-Teile Katalysator aus Beispiel 3

### Isocyanatkomponente

### Mischung aus 42 Teilen Lupranat® M 20 W (Polymer-MDI, Elastogran GmbH) und einem Gemisch aus 2,4'- und 4,4'-MDI (11Teile Lupranat® ME und 47 Teile Lupranat® MI, Elastogran GmbH)

Nach 5 min wurde der fertige Weichschaumstoff aus der Form genommen. Die Eigenschaften dieses Schaumstoffs und die Reaktionsparameter (aufgenommen an einem Becherschaum mit gleicher Rezeptur und gleichem Index) werden in Tabelle 1 mit denen des Schaumstoffs aus Beispiel 10 verglichen.

Um Bedingungen zu simulieren, wie bei oben erwähnten Spezialanwendungen, bei denen Polyurethanwerkstoffe hydrolytischen Belastungen ausgesetzt werden und um Schaumstoffe mit meßbaren Gehalten an aromatischen Aminen zu erhalten, wurde eine Feuchtwärmelagerung durchgeführt. Hierzu wurden jeweils Probewürfel mit der Kantenlänge 3 cm bei 90°C und 90 % relativer Luftfeuchtigkeit für 72 Stunden in einem Klimaschrank gelagert. Die Extraktion der aromatischen Amine wurde mittels einer von Prof. Skarping, Universität Lund, entwickelten Methode durchgeführt. Hierzu wird der Schaum in 10 ml Essigsäure (w = 1 Gew.-%) 10 mal ausgedrückt. Die Essigsäure wurde bei zusammengedrückter Schaumprobe in einen 50-ml-Meßkolben überführt. Der Vorgang wird zweimal wiederholt und der Meßkolben anschließend bis zur Meßmarke mit Essigsäure (w = 1 Gew.-%) aufgefüllt. Anschließend wurde der MDA-Gehalt der vereinigten Extrakte mittels Kapillarelektrophorese mit UV-Detektion (Gerätetyp: Biofocus 3000, Messung der Peakflächen und Vergleich mit Imidazol als internem Standard) bestimmt. Die in Tabelle 1 angegebenen MDA-Gehalte entsprechen den Absolutgehalten des gebildeten MDA im PUR-Schaum.

**Tabelle 1:**

| Schaumstoffcharakterisierung und Reaktionsparameter | | |
|---|---|---|
| | Schaum aus Bsp. 10 | Schaum aus Bsp. 11 |
| Startzeit | 14 s | 14 s |
| Gelzeit | 85 s | 110 s |
| Steigzeit | 127 s | 155 s |
| Freigeschäumte Dichte | 45,4 g/l | 44,3 g/l |
| DVR | 3,7 % | 4,9 % |
| DVR nach Feuchtwärmelagerung | 11,6 % | 7,3 % |
| Δ DVR | 7,9 % | 2,4 % |
| RPE | 68 % | 63 % |
| RPE nach Feuchtwärmelagerung | 50 % | 57 % |
| Δ RPE | 18 % | 6 % |
| SH | 6,0 kPa | 5,8 kPa |
| SH nach Feuchtwärmelagerung | 4,2 kPA | 5,0 kPa |
| Δ SH | 1,8 kPa | 0,8 kPa |
| 4,4'-MDA | < 1 ppm | < 1 ppm |
| 2,4'-MDA | < 1 ppm | < 1 ppm |
| 4,4'-MDA nach Feuchtwärmelagerung | 554 ppm | 100 ppm |
| 2,4'-MDA nach Feuchtwärmelagerung | 828 ppm | 208 ppm |

Bei den in der Tabelle angegebenen Abkürzungen handelt es sich um:
- DVR:: Druckverformungsrest, gemessen nach DIN EN ISO 1856
- RPE:: Rückprallelastizität, gemessen nach DIN 53573
- SH:: Stauchhärte, gemessen nach DIN EN ISO 3386 bei 40 % Stauchung des Probekörpers

Wie die Daten in Tabelle 1 zeigen führt der erfindungsgemäße Katalysator zu einer nur unwesentlich langsameren Schäumreaktion als der übliche einbaubare Katalysator Aminopropylimidazol. Auch die mechanischen Eigenschaften (DVR, RPE, SH) sind mit dem erfindungsgemäßen Katalysator im ungealterten Zustand nur wenig anders als beim Vergleichsschaum. Nach Feuchtwärmelagerung jedoch sind diese Werte beim Vergleichsschaum deutlich schlechter als beim erfindungsgemäß hergestellten Schaum, bei welchem sich die mechanischen Werte in weitaus geringerem Maße ändern. Nach Feuchtwärmealterung wird im erfindungsgemäßen Schaum außerdem deutlich weniger MDA gefunden als im Vergleichsschaum.

### Beispiel 12

### Synthese eines Katalysators aus 1-(2-Hydroxyethyl)piperazin und Itaconsäuredimethylester

In einem 500 ml Vierhalskolben mit Rückflußkühler, Tropftrichter (mit Druckausgleich ) und Innenthermometer wurden 60 g 1-(2-Hydroxyethyl)piperazin in 60 ml Methanol gelöst. Unter Rühren tropfte man 72,88 g Itaconsäuredimethylester zu der Lösung. Es wurde auf 70°C erhitzt und bei dieser Temperatur 6 h unter Rückfluss gerührt. Dann wurde das Methanol im Vakuum über einen Rotationsverdampfer abdestilliert.

### Beispiel 13

### Herstellung eines Weichschaumstoffes mit dem Katalysator aus Beispiel 12

Es wurden 750 g Polyolkomponente mit 365 g Isocyanatkomponente (Index 90) vermischt und die aufschäumende Masse in eine auf 50°C temperierte Aluminiumform (40 cm x 40 cm x 10 cm) überführt, wobei sich die Komponenten folgendermaßen aufbauten:

### Polyolkomponente:

97 Gew.-Teile Lupranol® 2090, Molekulargewicht: 6000, OH-Zahl: 28 (Elastogran GmbH)
3 Gew.-Teile Lupranol® 2047, Molekulargewicht 4000, OH-Zahl: 42 (Elastogran GmbH)
3,31 Gew.-Teile Wasser
0,6 Gew.-Teile 2-(2-Dimethylaminoethoxy)ethanol
0,5 Gew.-Teile Tegostab® B8631 (Goldschmidt)
0,8 Gew.-Teile Katalysator aus Beispiel 12

### Isocyanatkomponente:

### Mischung aus 42 Teilen Lupranat® M 20 W (Polymer-MDI, Elastogran GmbH) und einem Gemisch aus 2,4'- und 4,4'-MDI (11 Teile Lupranat® ME und 47 Teile Lupranat® MI, Elastogran GmbH)

Nach 5 min wurde der fertige Weichschaumstoff aus der Form genommen. Die Eigenschaften dieses Schaumstoffs und die Reaktionsparameter (aufgenommen an einem Becherschaum mit gleicher Rezeptur und gleichem Index) werden in Tabelle 2 mit denen des Schaumstoffs aus Beispiel 10 verglichen.

Um Bedingungen zu simulieren, wie bei oben erwähnten Spezialanwendungen, bei denen Polyurethanwerkstoffe hydrolytischen Belastungen ausgesetzt werden und um Schaumstoffe mit messbaren Gehalten an aromatischen Aminen zu erhalten, wurde eine Feuchtwärmelagerung und Extraktion von Schaumproben wie unter Beispiel 11 beschrieben durchgeführt. Anschließend wurde der MDA-Gehalt der vereinigten Extrakte mittels Kapillarelektrophorese mit UV-Detektion (Gerätetyp: Biofocus 3000, Messung der Peakflächen und Vergleich mit Imidazol als internem Standard) bestimmt. Die in Tabelle 2 angegebenen MDA-Gehalte entsprechen den Absolutgehalten des gebildeten MDA im PUR-Schaum.

**Tabelle 2:**

| Schaumstoffcharakterisierung und Reaktionsparameter | | |
|---|---|---|
| | Schaum aus Bsp. 10 | Schaum aus Bsp. 13 |
| Startzeit | 14 s | 16 s |
| Gelzeit | 85 s | 95 s |
| Steigzeit | 127 s | 167 s |
| Freigeschäumte Dichte | 45,4 g/l | 42,5 g/l |
| DVR | 3,7 % | 4,6 % |
| DVR nach Feuchtwärmelagerung | 11,6 % | 7,6 % |
| Δ DVR | 7,9 | 3,0 % |
| RPE | 68 % | 65 % |
| RPE nach Feuchtwärmelagerung | 50 % | 61 % |
| Δ RPE | 18 % | 4 % |
| SH | 6,0 kPa | 7,7 kPa |
| SH nach Feuchtwärmelagerung | 4,2 kPA | 6,8 kPa |
| Δ SH | 1,8 kPa | 0,9 kPa |
| Fogging | 0,22 mg | 0,29 mg |
| 4,4'-MDA | < 1 ppm | < 1 ppm |
| 2,4'-MDA | < 1 ppm | < 1 ppm |
| 4,4'-MDA nach Feuchtwärmelagerung | 554 ppm | 62 ppm |
| 2,4'-MDA nach Feuchtwärmelagerung | 828 ppm | 147 ppm |

Bei den in der Tabelle angegebenen Abkürzungen handelt es sich um:
- DVR:: Druckverformungsrest, gemessen nach DIN EN ISO 1856
- RPE:: Rückprallelastizität, gemessen nach DIN 53573
- SH:: Stauchhärte, gemessen nach DIN EN ISO 3386 bei 40 % Stauchung des Probekörpers

Wie die Daten in Tabelle 2 zeigen führt der erfindungsgemäße Katalysator zu einer nur unwesentlich langsameren Schäumreaktion als der übliche einbaubare Katalysator Aminopropylimidazol. Auch die mechanischen Eigenschaften (DVR, RPE, SH) sind mit dem erfindungsgemäßen Katalysator im ungealterten Zustand nur wenig anders als beim Vergleichsschaum. Nach Feuchtwärmelagerung jedoch sind diese Werte beim Vergleichsschaum deutlich schlechter als beim erfindungsgemäß hergestellten Schaum, bei welchem sich die mechanischen Werte in weitaus geringerem Maße ändern. Nach Feuchtwärmealterung wird im erfindungsgemäßen Schaum außerdem deutlich weniger MDA gefunden als im Vergleichsschaum.

### Beispiel 14

### Synthese eines Katalysators aus 1-(2-Hydroxyethyl)piperazin und Maleinsäuredibutylester

In einem 500 ml Vierhalskolben mit Rückflußkühler, Tropftrichter (mit Druckausgleich ) und Innenthermometer wurden 40 g 1-(2-Hydroxyethyl)piperazin in 40 ml Methanol gelöst. Unter Rühren tropfte man 70,14 g Maleinsäuredibutylester zu der Lösung, wobei die Temperatur auf etwa 35°C gehalten wurde. Man ließ die Reaktionsmischung 24 h stehen. Dann wurde das Methanol im Vakuum über einen Rotationsverdampfer abdestilliert.

### Beispiel 15

### Herstellung eines Weichschaumstoffes mit dem Katalysator aus Beispiel 14

Es wurden 750 g Polyolkomponente mit 365 g Isocyanatkomponente (Index 90) vermischt und die aufschäumende Masse in eine auf 50°C temperierte Aluminiumform (40 cm x 40 cm x 10 cm) überführt, wobei sich die Komponenten folgendermaßen aufbauten:

### Polyolkomponente:

97 Gew.-Teile Lupranol® 2090, Molekulargewicht: 6000, OH-Zahl: 28 (Elastogran GmbH)
3 Gew.-Teile Lupranol® 2047, Molekulargewicht 4000, OH-Zahl: 42 (Elastogran GmbH)
3,31 Gew.-Teile Wasser
0,6 Gew.-Teile 2- (2-Dimethylaminoethoxy) ethanol
0,5 Gew.-Teile Tegostab® B8631 (Goldschmidt)
0,8 Gew.-Teile Katalysator aus Beispiel 14

### Isocyanatkomponente:

### Mischung aus 42 Teilen Lupranat® M 20 W (Polymer-MDI, Elastogran GmbH) und einem Gemisch aus 2,4'- und 4,4'-MDI (11 Teile Lupranat® ME und 47 Teile Lupranat® MI, Elastogran GmbH)

Nach 5 min wurde der fertige Weichschaumstoff aus der Form genommen. Die Eigenschaften dieses Schaumstoffs und die Reaktionsparameter (aufgenommen an einem Becherschaum mit gleicher Rezeptur und gleichem Index) werden in Tabelle 3 mit denen des Schaumstoffs aus Beispiel 10 verglichen.

Um Bedingungen zu simulieren, wie bei oben erwähnten Spezialanwendungen, bei denen Polyurethanwerkstoffe hydrolytischen Belastungen ausgesetzt werden und um Schaumstoffe mit messbaren Gehalten an aromatischen Aminen zu erhalten, wurde eine Feuchtwärmelagerung und Extraktion von Schaumproben wie unter Beispiel 11 beschrieben durchgeführt. Anschließend wurde der MDA-Gehalt der vereinigten Extrakte mittels Kapillarelektrophorese mit UV-Detektion (Gerätetyp: Biofocus 3000, Messung der Peakflächen und Vergleich mit Imidazol als internem Standard) bestimmt. Die in Tabelle 3 angegebenen MDA-Gehalte entsprechen den Absolutgehalten des gebildeten MDA im PUR-Schaum.

**Tabelle 3:**

| Schaumstoffcharakterisierung und Reaktionsparameter | | |
|---|---|---|
| | Schaum aus Bsp. 10 | Schaum aus Bsp. 15 |
| Startzeit | 14 s | 21 s |
| Gelzeit | 85 s | 100 s |
| Steigzeit | 127 s | 165 s |
| Freigeschäumte Dichte | 45,4 g/l | 43,1 g/l |
| DVR | 3,7 % | 4,6 % |
| DVR nach Feuchtwärmelagerung | 11,6 % | 8,4 % |
| Δ DVR | 7,9 % | 3,8 % |
| RPE | 68 % | 62 % |
| RPE nach Feuchtwärmelagerung | 50 % | 56 % |
| Δ RPE | 18 % | 6 % |
| SH | 6,0 kPa | 6,3 kPa |
| SH nach Feuchtwärmelagerung | 4,2 kPA | 4,9 kPa |
| Δ SH | 1,8 kPa | 1,4 kPa |
| Fogging | 0,22 mg | 0,25 mg |
| 4,4'-MDA | < 1 ppm | < 1 ppm |
| 2,4'-MDA | < 1 ppm | < 1 ppm |
| 4,4'-MDA nach Feuchtwärmelagerung | 554 ppm | 214 ppm |
| 2,4'-MDA nach Feuchtwärmelagerung | 828 ppm | 401 ppm |

Bei den in der Tabelle angegebenen Abkürzungen handelt es sich um:
- DVR:: Druckverformungsrest, gemessen nach DIN EN ISO 1856
- RPE:: Rückprallelastizität, gemessen nach DIN 53573
- SH:: Stauchhärte, gemessen nach DIN EN ISO 3386 bei 40 % Stauchung des Probekörpers

Wie die Daten in Tabelle 3 zeigen führt der erfindungsgemäße Katalysator zu einer nur unwesentlich langsameren Schäumreaktion als der übliche einbaubare Katalysator Aminopropylimidazol. Auch die mechanischen Eigenschaften (DVR, RPE, SH) sind mit dem erfindungsgemäßen Katalysator im ungealterten Zustand nur wenig anders als beim Vergleichsschaum. Nach Feuchtwärmelagerung jedoch sind diese Werte beim Vergleichsschaum deutlich schlechter als beim erfindungsgemäß hergestellten Schaum, bei welchem sich die mechanischen Werte in weitaus geringerem Maße ändern. Nach Feuchtwärmealterung wird im erfindungsgemäßen Schaum außerdem deutlich weniger MDA gefunden als im Vergleichsschaum.

### Beispiel 16

### Synthese eines Katalysators aus 1-(2-Hydroxyethyl)piperazin und Maleinsäurediethylester

In einem 500 ml Vierhalskolben mit Rückflußkühler, Tropftrichter (mit Druckausgleich ) und Innenthermometer wurden 30 g 1-(2-Hydroxyethyl)piperazin in 30 ml Methanol gelöst. Unter Rühren tropfte man 39,68 g Maleinsäurediethylester zu der Lösung, wobei die Temperatur auf etwa 35°C gehalten wurde. Man ließ die Reaktionsmischung 24 h stehen. Dann wurde das Methanol im Vakuum über einen Rotationsverdampfer abdestilliert, wobei das Produkt auskristallisiert.

### Beispiel 17

### Herstellung eines Weichschaumstoffes mit dem Katalysator aus Beispiel 16

Es wurden 750 g Polyolkomponente mit 365 g Isocyanatkomponente (Index 90) vermischt und die aufschäumende Masse in eine auf 50°C temperierte Aluminiumform (40 cm x 40 cm x 10 cm) überführt, wobei sich die Komponenten folgendermaßen aufbauten:

### Polyolkomponente:

97 Gew.-Teile Lupranol® 2090, Molekulargewicht: 6000, OH-Zahl: 28 (Elastogran GmbH)
3 Gew.-Teile Lupranol® 2047, Molekulargewicht 4000, OH-Zahl: 42 (Elastogran GmbH)
3,31 Gew.-Teile Wasser
0,6 Gew.-Teile 2-(2-Dimethylaminoethoxy)ethanol
0,5 Gew.-Teile Tegostab® B8631 (Goldschmidt)
0,8 Gew.-Teile Katalysator aus Beispiel 16

### Isocyanatkomponente:

### Mischung aus 42 Teilen Lupranat® M 20 W (Polymer-MDI, Elastogran GmbH) und einem Gemisch aus 2,4'- und 4,4'-MDI (11 Teile Lupranat® ME und 47 Teile Lupranat® MI, Elastogran GmbH)

Nach 5 min wurde der fertige Weichschaumstoff aus der Form genommen. Die Eigenschaften dieses Schaumstoffs und die Reaktionsparameter (aufgenommen an einem Becherschaum mit gleicher Rezeptur und gleichem Index) werden in Tabelle 4 mit denen des Schaumstoffs aus Beispiel 10 verglichen.

Um Bedingungen zu simulieren, wie bei oben erwähnten Spezialanwendungen, bei denen Polyurethanwerkstoffe hydrolytischen Belastungen ausgesetzt werden und um Schaumstoffe mit messbaren Gehalten an aromatischen Aminen zu erhalten, wurde eine Feuchtwärmelagerung und Extraktion von Schaumproben wie unter Beispiel 11 beschrieben durchgeführt. Anschließend wurde der MDA-Gehalt der vereinigten Extrakte mittels Kapillarelektrophorese mit UV-Detektion (Gerätetyp: Biofocus 3000, Messung der Peakflächen und Vergleich mit Imidazol als internem Standard) bestimmt. Die in Tabelle 4 angegebenen MDA-Gehalte entsprechen den Absolutgehalten des gebildeten MDA im PUR-Schaum.

**Tabelle 4:**

| Schaumstoffcharakterisierung und Reaktionsparameter | | |
|---|---|---|
| | Schaum .aus Bsp. 10 | Schaum aus Bsp. 17 |
| Startzeit | 14 s | 21 s |
| Gelzeit | 85 s | 101 s |
| Steigzeit | 127 s | 163 s |
| Freigeschäumte Dichte | 45,4 g/l | 44,3 g/l |
| DVR | 3,7 % | 4,4 % |
| DVR nach Feuchtwärmelagerung | 11,6 % | 8,4 % |
| Δ DVR | 7,9 % | 4 % |
| RPE | 68 % | 66 % |
| RPE nach Feuchtwärmelagerung | 50 % | 57 % |
| Δ RPE | 18 % | 9 % |
| SH | 6,0 kPa | 6,3 kPa |
| SH.nach Feuchtwärmelagerung | 4,2 kPa | 5,0 kPa |
| Δ SH | 1,8 kPa | 1,3 kPa |
| Fogging | 0,22 mg | 0,20 mg |
| 4,4'-MDA | < 1 ppm | < 1 ppm |
| 2,4'-MDA | < 1 ppm | < 1 ppm |
| 4,4'-MDA nach Feuchtwärmelagerung | 554 ppm | 151 ppm |
| 2,4'-MDA nach Feuchtwärmelagerung | 828 ppm | 299 ppm |

Bei den in der Tabelle angegebenen Abkürzungen handelt es sich um:
- DVR:: Druckverformungsrest, gemessen nach DIN EN ISO 1856
- RPE:: Rückprallelastizität, gemessen nach DIN 53573
- SH:: Stauchhärte, gemessen nach DIN EN ISO 3386 bei 40 % Stauchung des Probekörpers

Wie die Daten in Tabelle 4 zeigen führt der erfindungsgemäße Katalysator zu einer nur unwesentlich langsameren Schäumreaktion als der übliche einbaubare Katalysator Aminopropylimidazol. Auch die mechanischen Eigenschaften (DVR, RPE, SH) sind mit dem erfindungsgemäßen Katalysator im ungealterten Zustand nur wenig anders als beim Vergleichsschaum. Nach Feuchtwärmelagerung jedoch sind diese Werte beim Vergleichsschaum deutlich schlechter als beim erfindungsgemäß hergestellten Schaum, bei welchem sich die mechanischen Werte in weitaus geringerem Maße ändern. Nach Feuchtwärmealterung wird im erfindungsgemäßen Schaum außerdem deutlich weniger MDA gefunden als im Vergleichsschaum.

### Beispiel 18

### Herstellung eines Weichschaumstoffes mit dem Katalysator aus Beispiel 12 zusätzlich zu Aminopropylimidazol

Es wurden 750 g Polyolkomponente mit 363 g Isocyanatkomponente (Index 90) vermischt und die aufschäumende Masse in eine auf 50°C temperierte Aluminiumform (40 cm x 40 cm x 10 cm) überführt, wobei sich die Komponenten folgendermaßen aufbauten:

### Polyolkomponente:

97 Gew.-Teile Lupranol® 2090, Molekulargewicht: 6000, OH-Zahl: 28 (Elastogran GmbH)
3 Gew.-Teile Lupranol® 2047, Molekulargewicht 4000, OH-Zahl: 42 (Elastogran GmbH)
3,31 Gew.-Teile Wasser
0,6 Gew.-Teile 2-(2-Dimethylaminoethoxy)ethanol
0,5 Gew.-Teile Tegostab® B8631 (Goldschmidt)
0,8 Gew.-Teile Aminopropylimidazol (BASF Aktiengesellschaft)
0,8 Gew.-Teile Katalysator aus Beispiel 12

### Isocyanatkomponente:

### Mischung aus 42 Teilen Lupranat® M 20 W (Polymer-MDI, Elastogran GmbH) und einem Gemisch aus 2,4'- und 4,4'-MDI (11 Teile Lupranat® ME und 47 Teile Lupranat® MI, Elastogran GmbH)

Nach 5 min wurde der fertige Weichschaumstoff aus der Form genommen. Die Eigenschaften dieses Schaumstoffs und die Reaktionsparameter (aufgenommen an einem Becherschaum mit gleicher Rezeptur und gleichem Index) werden in Tabelle 5 mit denen des Schaumstoffs aus Beispiel 10 verglichen.

Um Bedingungen zu simulieren, wie bei oben erwähnten Spezialanwendungen, bei denen Polyurethanwerkstoffe hydrolytischen Belastungen ausgesetzt werden und um Schaumstoffe mit messbaren Gehalten an aromatischen Aminen zu erhalten, wurde eine Feuchtwärmelagerung und Extraktion von Schaumproben wie unter Beispiel 11 beschrieben durchgeführt. Anschließend wurde der MDA-Gehalt der vereinigten Extrakte mittels Kapillarelektrophorese mit UV-Detektion (Gerätetyp: Biofocus 3000, Messung der Peakflächen und Vergleich mit Imidazol als internem Standard) bestimmt. Die in Tabelle 5 angegebenen MDA-Gehalte entsprechen den Absolutgehalten des gebildeten MDA im PUR-Schaum.

**Tabelle 5:**

| Schaumstoffcharakterisierung und Reaktionsparameter | | |
|---|---|---|
| | Schaum aus Bsp. 10 | Schaum aus Bsp. 18 |
| Startzeit | 14 s | 13 s |
| Gelzeit | 85 s | 74 s |
| Steigzeit | 127 s | 122 s |
| Freigeschäumte Dichte | 45,4 g/l | 43,0 g/l |
| DVR | 3,7 % | 3,8 % |
| DVR nach Feuchtwärmelagerung | 11,6 % | 6,7 % |
| Δ DVR | 7,9 % | 2,9 % |
| RPE | 68 % | 67 % |
| RPE nach Feuchtwärmelagerung | 50 % | 59 % |
| Δ RPE | 18 % | 8 % |
| SH | 6,0 kPa | 5,8 kPa |
| SH nach Feuchtwärmelagerung | 4,2 kPA | 5,0 kPa |
| Δ SH | 1,8 kPa | 0,8 kPa |
| Fogging | 0,22 mg | 0,19 mg |
| 4,4'-MDA | < 1 ppm | < 1 ppm |
| 2,4'-MDA | < 1 ppm | < 1 ppm |
| 4,4'-MDA nach Feuchtwärmelagerung | 554 ppm | 122 ppm |
| 2,4'-MDA nach Feuchtwärmelagerung | 828 ppm | 264 ppm |

Bei den in der Tabelle angegebenen Abkürzungen handelt es sich um:
- DVR:: Druckverformungsrest, gemessen nach DIN EN ISO 1856
- RPE:: Rückprallelastizität, gemessen nach DIN 53573
- SH:: Stauchhärte, gemessen nach DIN EN ISO 3386 bei 40 % Stauchung des Probekörpers

Wie die Daten in Tabelle 5 zeigen kann die Reaktionsgeschwindigkeit des Polyurethansystems durch Kombination des erfindungsgemäßen Katalysators mit einem anderen Katalysator im Vergleich zum alleinigen Einsatz des erfindungsgemäßen Katalysators (vgl. Beispiel 13) erhöht werden. Die mechanischen Eigenschaften (DVR, RPE, SH) sind mit dem erfindungsgemäßen Katalysator im ungealterten Zustand nur wenig anders als beim Vergleichsschaum ohne erfindungsgemäßen Katalysator. Nach Feuchtwärmelagerung jedoch sind diese Werte beim Vergleichsschaum deutlich schlechter als beim erfindungsgemäß hergestellten Schaum, bei welchem sich die mechanischen Werte in weitaus geringerem Maße ändern. Nach Feuchtwärmealterung wird im erfindungsgemäßen Schaum außerdem deutlich weniger MDA gefunden als im Vergleichsschaum. Dieses Beispiel zeigt, dass die erfindungsgemäßen Katalysatoren zusammen mit anderen Katalysatoren vorteilhaft als Additive zur Verbesserung der mechanischen Eigenschaften und Reduktion der Bildung aromatischer Amine nach Feuchtwärmealterung eingesetzt werden können.

### Beispiel 19

### Katalytische Aktivität des Katalysators aus Beispiel 16

Um die katalytische Aktivität des Katalysators aus Beispiel 16 beurteilen zu können, wurden Schäumversuche durchgeführt, bei denen entweder kein oder nur dieser Katalysator verwendet wurde.

### Vergleichsversuch ohne Katalysatorzugabe:

In einem 1,1 l fassenden Polyethyleneimer wurden 100 g Polyolkomponente mit 48,5 g Isocyanatkomponente (Index 90) vermischt, wobei sich die Komponenten folgendermaßen aufbauten:

### Polyolkomponente:

97 Gew.-Teile Lupranol® 2090, Molekulargewicht: 6000, OH-Zahl: 28 (Elastogran GmbH)
3 Gew.-Teile Lupranol® 2047, Molekulargewicht 4000, OH-Zahl: 42 (Elastogran GmbH)
3,31 Gew.-Teile Wasser
0,5 Gew.-Teile Tegostab® B8631 (Goldschmidt)

### Isocyanatkomponente:

### Mischung aus 42 Teilen Lupranat® M 20 W (Polymer-MDI, Elastogran GmbH) und einem Gemisch aus 2,4'- und 4,4'-MDI (11 Teile Lupranat® ME und 47 Teile Lupranat® MI, Elastogran GmbH)

Die reagierende Masse begann nach 60 s (Startzeit) aufzuschäumen, kollabierte dann jedoch völlig, so dass kein brauchbarer Polyurethanweichschaum erhalten wurde. Die Fadenziehzeit (Gelzeit, Abbindezeit) der kollabierten Masse lag bei 660 s.

### Versuch mit dem erfindungsgemäßen Katalysator aus Beispiel 16:

In einem 1,1 l fassenden Polyethyleneimer wurden 100 g Polyolkomponente mit 48,1 g Isocyanatkomponente (Index 90) vermischt, wobei sich die Komponenten folgendermaßen aufbauten:

### Polyolkomponente:

97 Gew.-Teile Lupranol® 2090, Molekulargewicht: 6000, OH-Zahl: 28 (Elastogran GmbH)
3 Gew.-Teile Lupranol® 2047, Molekulargewicht 4000, OH-Zahl: 42 (Elastogran GmbH)
3,31 Gew.-Teile Wasser
0,5 Gew.-Teile Tegostab® B8631 (Goldschmidt)
4 Gew.-Teile Katalysator aus Beispiel 16

### Isocyanatkomponente:

### Mischung aus 42 Teilen Lupranat® M 20 W (Polymer-MDI, Elastogran GmbH) und einem Gemisch aus 2,4'- und 4,4'-MDI (11 Teile Lupranat® ME und 47 Teile Lupranat® MI, Elastogran GmbH)

Die reagierende Masse begann nach 29 s (Startzeit) aufzuschäumen und bildete einen stabilen Polyurethanweichschaum. Die Fadenziehzeit (Gelzeit, Abbindezeit) des Schaums lag bei 220 s.

Diese Versuche zeigen, dass der erfindungsgemäße Katalysator aus Beispiel 16 ausreichend katalytisch aktiv ist, um zu einem stabilen Schaum zu gelangen, was ohne den Katalysator nicht möglich war.

## Patentansprüche

1. Katalysatoren enthaltend als strukturelle Einheiten mindestens eine tertiäre Aminogruppe sowie mindestens eine Gruppe, die nach ihrer Zersetzung die tertiäre Aminogruppe komplexieren oder protonieren kann und wobei die Katalysatoren mindestens genauso viele oder mehr zersetzbare und nach Zersetzung komplexierend oder protonierend wirkende Gruppen enthalten wie katalytisch aktive Zentren.

2. Katalysatoren gemäß Anspruch 1, **dadurch gekennzeichnet, daß** die Zersetzung durch Hydrolyse erfolgt.

3. Katalysatoren gemäß Anspruch 1, **dadurch gekennzeichnet, daß** die Katalysatoren die Umsetzung von Isocyanaten mit gegenüber Isocyanaten reaktiven Verbindungen katalysieren.

4. Katalysatoren enthaltend als Struktureinheit mindestens eine tertiäre Aminogruppe sowie mindestens eine Struktureinheit ausgewählt aus der folgenden Gruppe: Carbonsäureester, Sulfonsäureester, Carbonsäureanhydride, Lactone, Sultone, Phosphorsäureester und/oder Phosphonsäureester, wobei die Katalysatoren mindestens genauso viele oder mehr zersetzbare und nach Zersetzung komplexierend oder protonierend wirkende Gruppen enthalten wie katalytisch aktive Zentren.

5. Katalysatoren gemäß einem der Ansprüche 1 bis 4, **dadurch gekennzeichnet, daß** der Katalysator mindestens eine gegenüber Isocyanaten reaktive Gruppe aufweist.

6. Verfahren zur Herstellung von Polyisocyanat-Polyadditionsprodukten, **dadurch gekennzeichnet, daß** man Katalysatoren gemäß einem der Ansprüche 1 bis 5 einsetzt.

7. Verfahren zur Herstellung von Polyurethanweichschaumstoffen, **dadurch gekennzeichnet, daß** man Katalysatoren gemäß einem der Ansprüche 1 bis 5 einsetzt.

8. Polyisocyanat-Polyadditionsprodukte enthaltend Katalysatoren gemäß einem der Ansprüche 1 bis 5.

9. Polyurethanweichschaumstoffe enthaltend Katalysatoren gemäß einem der Ansprüche 1 bis 5.

10. Verwendung von Katalysatoren gemäß einem der Ansprüche 1 bis 5 zur Herstellung von Polyisocyanat-Polyadditionsprodukten.

## Claims

1. A catalyst containing, as structural units, at least one tertiary amino group and at least one group which, after its decomposition, is capable of complexing or protonating the tertiary amino group, and the catalyst containing at least just as many or more groups which are decomposable and, after decomposition, have a complexing or protonating action as they have catalytically active centers.

2. A catalyst as claimed in claim 1, wherein the decomposition is effected by hydrolysis.

3. A catalyst as claimed in claim 1, which catalyzes the reaction of isocyanates with compounds reactive toward isocyanates.

4. A catalyst containing at least one tertiary amino group as a structural unit and at least one structural unit selected from the following group: carboxylic esters, sulfonic esters, carboxylic anhydrides, lactones, sultones, phosphoric esters and/or phosphonic esters, the catalyst containing at least just as many or more groups which are decomposable and, after decomposition, have a complexing or protonating action as they have catalytically active centers.

5. A catalyst as claimed in any of claims 1 to 4, which has at least one group reactive toward isocyanates.

6. A process for the preparation of polyisocyanate.polyadducts, wherein a catalyst as claimed in any of claims 1 to 5 is used.

7. A process for the preparation of flexible polyurethane foams, wherein a catalyst as claimed in any of claims 1 to 5 is used.

8. A polyisocyanate polyadduct containing a catalyst as claimed in any of claims 1 to 5.

9. A flexible polyurethane foam containing a catalyst as claimed in any of claims 1 to 5.

10. The use of a catalyst as claimed in any of claims 1 to 5 for the preparation of polyisocyanate polyadducts.

## Revendications

1. Catalyseurs contenant, comme unités structurelles, au moins un groupe amino tertiaire ainsi qu'au moins un groupe qui peut, après sa décomposition, complexer le groupe amino tertiaire ou le protoner, les catalyseurs contenant au moins autant de groupes décomposables et à action complexante ou protonante après décomposition que de centres catalytiquement actifs, ou davantage.

2. Catalyseurs suivant la revendication 1, **caractérisés en ce que** la décomposition a lieu par hydrolyse.

3. Catalyseurs suivant la revendication 1 **caractérisés en ce que** les catalyseurs catalysent la réaction d'isocyanates avec des composés réactifs vis-à-vis des isocyanates.

4. Catalyseurs contenant, comme unité structurelle, au moins un groupe amino tertiaire ainsi qu'au moins une unité structurelle choisie parmi le groupe suivant : esters d'acide carboxylique, esters d'acide sulfonique, anhydrides d'acide carboxylique, lactones, sultones, esters d'acide phosphorique et/ou esters d'acide phosphonique, les catalyseurs contenant au moins autant de groupes décomposables et à action complexante ou protonante après décomposition que de centres catalytiquement actifs, ou davantage.

5. Catalyseurs suivant l'une des revendications 1 à 4, **caractérisés en ce que** le catalyseur présente au moins un groupe réactif vis-à-vis des isocyanates.

6. Procédé de préparation de produits de polyaddition de polyisocyanate, **caractérisé en ce qu'**on met en oeuvre des catalyseurs suivant l'une des revendications 1 à 5.

7. Procédé de préparation de mousses molles de polyuréthanne, **caractérisé en ce qu'**on met en oeuvre des catalyseurs suivant l'une des revendications 1 à 5.

8. Produits de polyaddition de polyisocyanate contenant des catalyseurs suivant l'une des revendications 1 à 5.

9. Mousses molles de polyuréthanne contenant des catalyseurs suivant l'une des revendications 1 à 5.

10. Utilisation de catalyseurs suivant l'une des revendications 1 à 5, pour la préparation de produits de polyaddition de polyisocyanate.
